Europäisches Patentamt

European Patent Office

Office européen des brevets

(11) Publication number: **0 038 004**
**B1**

(12) **EUROPEAN PATENT SPECIFICATION**

(45) Date of publication of patent specification: **29.10.86**

(21) Application number: **81102588.1**

(22) Date of filing: **07.04.81**

(51) Int. Cl.⁴: **C 08 F 8/00, C 08 F 255/00,
C 08 F 279/00, C 08 G 81/02,
C 08 C 19/00**

(54) **Process for producing the composition of modified chlorinated resins.**

(30) Priority: **15.04.80 JP 50142/80
26.07.80 JP 102817/80**

(43) Date of publication of application:
**21.10.81 Bulletin 81/42**

(45) Publication of the grant of the patent:
**29.10.86 Bulletin 86/44**

(84) Designated Contracting States:
**DE FR GB IT NL**

(56) References cited:
**DE-A-1 720 700
GB-A-1 041 779
GB-A-1 374 464**

**CHEMICAL ABSTRACTS, vol. 89, no. 24,
December 1978, page 64, no. 198895z,
Columbus Ohio (USA);**

(73) Proprietor: **Asahipen Corporation
1-12, 4-chome Tsurumi Tsurumi-Ku
Osaka-City Osaka (JP)**

(72) Inventor: **Nakajima, Jun, Dr.
48-1, Shimogamo matsinokicho Sakyo-ku
Kyoto-City Kyoto (JP)**
Inventor: **Morinaga, Shigeki
1-8-406, Yuzato 3-chome Hagshisumiyoshi-Ku
Osaka-City Osaka (JP)**

(74) Representative: **Frühbuss, Heinrich, Dr.rer.nat.
Hubert-Reissner-Strasse 5a
D-8032 Gräfelfing b. München (DE)**

Courier Press, Leamington Spa, England.

## Description

This invention is concerned with a process for producing modified chlorinated resins which are suitable for use as a vehicle in coating materials, printing inks or adhesives.

Mixtures of chlorinated rubber and chlorinated polyethylene having a chlorine content of more than 50% by weight with alkyd and/or other resins are used as vehicles for coating materials and others. However, the coating film obtained by the use of such chlorinated polyolefin resin mixtures is poor in its weather resistance and is therefore disadvantageous in practical use.

On the other hand, it has been thought that low chlorine content resins have severe disadvantages as compared to those with high chlorine, content.

The first reason: these low chlorine resins are insoluble or only slightly soluble in common organic solvents and a sufficiently concentrated solution cannot be obtained.

The second reason: when the resins are soluble, the corresponding solutions are of poor stability; dechlorination occurs at higher temperatures, whilst viscosity increases or gelation occurs at lower temperatures.

Thus, the resins of this kind could not hitherto be put into practical use as vehicles for coating materials and the like.

Therefore, one object of this invention is to provide a process for producing modified chlorinated resins which are capable of overcoming these disadvantages, and which at the same time exhibit the advantageous properties obtained from resins of high chlorine content and low chlorine content.

Another object of this invention is to provide a process for modifying the chlorinated resins with easiness of processing mechanically or economically, and with high productivity without deteriorating the working environment.

An example of the process according to the present invention, comprises modifying chlorinated resins with a chlorine content of less than 50% by weight by allowing said chlorinated resins to react with a carbon-carbon double bond-containing compound.

Another example of the process according to the invention, comprises modifying a chlorinated resin using a vinyl compound as the above double bond-containing compound.

A further example of the process according to the invention, comprises modifying a chlorinated resin using a vinylidene compound as the above double bond-containing compound.

A further example of the process according to the invention, comprises modifying a chlorinated resin using an allyl compound as the above mentioned double bond-containing compound.

A different example of the process according to the invention, comprises modifying a chlorinated resin using a polybutadiene as the above mentioned double bond-containing compound.

The invention will be now described in detail.

The chlorinated resins to be used in this invention include chlorinated polyethylene, chlorinated polypropylene and chlorinated rubber, all of which contain less than 50% by weight chlorine.

The reason why resins having a chlorine content of less than 50% by weight are employed in this invention is as follows: Chlorinated resins having a chlorine content of more than 50% by weight decompose upon heating during the reaction with a compound with double bonds and evolve chlorine, by which the modification reaction is retarded.

As a consequence thereof, the coatings comprising the resultant modified resin have many disadvantages, for example, in the resistance to aging, the adhesion, the wear resistance, shock resistance or in weather resistance. All of such film properties come to gradually deteriorate.

On the contrary, when the chlorinated resins having a chlorine content of less than 50% by weight are used, the above mentioned modification reaction proceeds smoothly, and the composition thus obtained is excellent in its film properties such as the stability of resin, adhesion, durability, shock resistance and weather resistance.

As the aforesaid vinyl compounds, styrene, vinyl toluene, methyl vinyl ether, ethyl vinyl ether, vinyl acetate and acrylonitrile are employed.

As the aforesaid vinylidene compounds, vinylidene chloride may be employed. As the aforesaid allyl compounds, diallyl phthalate or triallyl cyanurate may be employed.

As the aforesaid polybutadiene homopolybutadiene may be employed.

In addition to the previously mentioned, this invention provides a method specified for reacting the said chlorinated resins with carbon-carbon double bond-containing compounds selected from vinyl compounds, vinylidene compounds, allyl compounds, and with a polybutadiene.

The method is such that chlorinated resins are allowed to react with compounds in an inert atmosphere such as nitrogen or helium, during heating in the presence of a single or mixed catalysts such as halogenated metals notably $AlI_3$, $AlCl_2$, $SnCl_3$, $BF_3$, metals notably Co, W, Cr, Ni, Se, Te, Mo, and their chlorides, oxides, hydroxides and carbonyles, and most preferably metals which belong to the 6th group in the periodic table, and/or their chlorides (dioxides, carbonyles). The resin composition thus produced is separated from the catalyst by filtration.

In the above method, it is preferable to raise the temperature as high as possible on the condition that it does not cause decomposition of the resins.

As a rule, the optimum temperature of the reaction is from 60 to 250°C, while the optimum reaction time ranges from 1 to 14 hours. In addition, it is good that the chlorinated resin be dissolved or suspended beforehand by heating in a solvent such as toluene or xylene and be then reacted with the double bond-containing compound.

When chlorinated resin is allowed to react with the double bond-containing compound in an oxygen free inert gas atmosphere, the oxidation is prevented in the presence of the above-mentioned catalyst of low toxicity and the modification of the chlorinated resin can be easily conducted without using any specific device made of a special material and without deteriorating the working environment as well.

Further, when the modified chlorinated resin is to be used in the form of an aerosol paint, said resin must be dissolved in a mixture consisting of 60 to 95% by weight of aromatic solvent and 40 to 5% by weight of either of ketone solvents, oxygen-containing solvents and chlorine containing aromatic solvents, all of these last three solvents having a boiling point higher than 130°C (preferably higher than 145°C).

Illustrative of said aromatic solvents are toluene and xylene. The above ketone solvents, may be ethyl-n-butyl ketone diisobutyl ketone, cyclohexanone or isophorone.

The oxygen-containing solvents may be cellosolves including ethylene glycol monoethyl ether acetate, ethylene glycol monobutyl ether acetate, diethylene glycol monoethyl ether or diethylene glycol monobutyl ether. The chlorine-containing aromatic solvents may be monochlorobenzene, ortho-dichlorobenzene or paradichlorobenzene.

After their dissolution in the above mentioned solvents, the modified chlorinated resins are filtered from catalyst and the other suspended particles.

In using the modified chlorinated resins in the form of an aerosol paint as mentioned above, the reason why as solvent to dissolve the composition a mixture of 60 to 95% weight aromatic solvent together with 40 to 5% by weight of the solvents consisting of ketone or chlorine-containing aromatic solvents is used is as follows:

When the aromatic solvents such as toluene or xylene are used individually, or when oxygen-containing solvents and/or chlorinated aromatic solvents are mixed with aromatic solvents at a ratio lower than or more than the above-mentioned %, the dissolving capacity of these solvents is insufficient and the composition thus obtained is not miscible with the propellant such as LPG or chlorofluoromethane, and it separates.

This causes the precipitation of pigments and the agglomeration of resins so that nozzle clogging is sometimes observed. The smooth operation of spraying becomes infeasible, and the beautiful coating film resulting from good levelling can not be expected to be reached. Contrarily to this, when a solvent composed of 60 to 95% by weight of aromatic solvent and 40 to 5% by weight of aromatic chlorinated solvent is used, then the dissolving capacity is greatly improved and all of the aforesaid points can be settled and a beautiful coating film of good levelling can be obtained.

On the other hand, the reasons why as oxygen-containing solvents or aromatic chlorinated solvents which are to be formulated with aromatic solvents, such solvents having a boiling point of more than 130°C are chosen are the following:

In case the oxygen-containing solvents or aromatic chlorinated solvents each having a boiling point of less than 130°C are formulated with the aromatic solvents which have a relatively low boiling point, these solvents evaporate at once soon after having been sprayed which results in a poor looking coating film (like orange peel).

In contrast to this, when the aromatic solvents are formulated with the oxygen-containing solvents or the aromatic chlorinated series solvents each having a boiling point higher than 130°C, these solvents evaporate successively from the solvent of lower boiling point to the one of higher boiling point according to the order of their boiling points, in consequence of which there is no possibility for the solvents to evaporating at once whereby a beautiful coating film of good levelling can be obtained.

When the said modified chlorinated resins are to be used as a paint or ink, it will be sufficient that coloring pigments such as carbon black, titanium dioxide, cyanine blue, or azo dyes, and additives and the other fillers are mixed therewith as desired.

As mentioned above, the modified chlorinated resins obtained according to the invention have excellent weather resistance as a result of the use of a starting chlorinated resin having a chlorine content lower than 50% by weight.

At the same time the solubility of said resins is improved and the shelf life of the resins are extremely prolonged as the result of the modification.

The adhesion to rubber, plastics such as polypropylene and metal, is greatly enhanced and the modified resins are therefore suitable for use as vehicles for coating materials and printing inks.

This method is also characterized by the high productivity and easiness of manufacture; making no use of specific manufacturing apparatus made of special material while not deteriorating the working environment.

Now, the invention will be described more particularly on the basis of the examples showing the most preferable embodiments, the comparisons indicating the relation to Prior Arts and the references serving for information:

# 0 038 004

Example 1:

| | |
|---|---|
| chlorinated polypropylene<br>(trade name:SUPERCHLON 803M, made by Sanyo Kokusaku<br>Pulp Co., chlorine content of 40% by weight, xylene<br>solution with solid content of 30% by weight) | 75 parts by weight |
| homopolybutadiene<br>(trade name:Nisso-PB-G 3000, made by Nippon Soda Co.) | 25 parts by weight |
| xylene (solvent) | 5 parts by weight |
| Raney nickel (catalyst) | 0.3 parts by weight |

According to the above formulation, weighed materials were heated under the stream of nitrogen gas up to 90°C and allowed to react at this temperature for 5 hours. The modified resin thus obtained was separated by filtering off suspended particles. The properties of the composition thus obtained are as shown in Table 1 to 3.

This example shows an embodiment wherein the modified chlorinated resin was obtained by using the chlorinated polypropylene as a chlorinated resin and a polybutadiene homopolymer as the double bond containing compound.

The modified resin obtained in this example is excellent in stability, as shown in Table 1, and has a good adhesion to plastics, such as polypropylene or to metals such as a sheet iron, and further it is good in wear resistance and shock resistance.

Films excellent in weather resistance can be obtained, as shown in Tables 2 and 3.

Moreover the salt spray test according to the testing method JIS Z2371 was carried out on the above coating film for 100 hours.

The rust preventing power was superior.

Example 2:

| | |
|---|---|
| chlorinated polyethylene<br>(trade name:SUPERCHLON 907 LTA, made by Sanyo Kokusaku<br>Pulp Co., chlorine content of 40% by weight, toluene<br>suspension with a solid content of 40% by weight) | 80 parts by weight |
| vinylidene chloride | 20 parts by weight |
| xylene (solvent) | 5 parts by weight |
| nickel oxide (catalyst) | 0.3 parts by weight |

Weighed materials according to the above formulation, were heated up to 80°C under a stream of nitrogen gas and allowed to react at this temperature for 5 hours.

The modified chlorinated resin was separated from suspended particles by filtration. The properties of the composition thus obtained are as shown in Tables 1 to 3.

This example shows an embodiment wherein the modified chlorinated resin was obtained by using the chlorinated polyethylene as a chlorinated resin and the vinylidene chloride as the double bond-containing compound.

The properties such as the stability of resin and the force of adhesion, wear resistance, shock resistance, and weather resistance of the coating film made of this composition were substantially equal to those in Example 1, as shown in Table 1 to 3, and further the rust preventing power of the coating film was also practically the same as in Example 1.

Example 3:

| | |
|---|---|
| chlorinated rubber | 70 parts by weight |
| Diallyl phthalate monomer | 30 parts by weight |
| xylene (solvent) | 5 parts by weight |
| cobalt hydroxide | 0.3 parts by weight |

According to the above formulation, weighed materials were heated under the stream of nitrogen gas up to 110°C and allowed to react at this temperature for 3 hours.

The modified chlorinated resin was separated from suspended particles. The properties of the composition thus obtained are as shown in Table 1 to 3.

This example shows an embodiment wherein chlorinated resin was obtained by using the chlorinated rubber as a chlorinated resin and diallyl phthalate monomer as a double bond-containing compound.

The properties such as the stability of resin and the force of adhesion, wear resistance, shock resistance, and weather resistance of the coating film made of this composition were substantially equal to those in Example 1, as shown in Tables 1 to 3, and further the rust preventing power of the coating film was also practically the same as in Example 1.

Comparison 1:

When a chlorinated polyethylene with chlorine content of 30% by weight (trade name: EMULLAX, made by Osaka Soda K.K.: xylene solution with solid content of 40% by weight) was used as a vehicle for a coating material without being modified by a double bond-containing compound, the composition obtained was slightly opaque in appearance. Even after repeated filtrations, it was impossible to make said resin completely transparent. After all, because of the very poor stability of the resin, it was impossible to make any coating material satisfactory for practical use.

Comparison 2:
When a chlorinated polypropylene with chlorine content of 40% by weight (trade name: SUPERCHLON 803 M, made by Sanyo Kokusaku Pulp K.K.: xylene solution with a solid content of 30% by weight) was used as vehicle for coating material without being modified by double bond-containing compound, the composition obtained was very poor in the stability of resin, and it was also impossible to make any coating material satisfactory for practical use.

Comparison 3:
When a chlorinated rubber with a chlorine content of 55% by weight (trade name: ADECAPLEN, made by Asahi Denka K.K.: xylene solution with solid content of 30% by weight) was used as a vehicle for a coating material, the coating film was poor in weather resistance. By way of example, the coating films painted on polypropylene and sheet iron scaled off during the progressive weather resistance test according to JIS K5400 (later described). In a word, it was impossible in such a way to obtain any coating material satisfactory for practical use.

The properties of the composition of modified chlorinated resin given in Example 1 to 3 are shown hereinafter collectively in Tables 1 to 3. In this connection, the measuring method of the properties listed in the above Tables 1 and 3 will be described as follows:

(Formation of coating film)
The coating film was formed on polypropylene and sheet iron by painting; of each vehicle given in the aforementioned examples, rutile type titanium dioxide and toluene were mixed in the ratio of 60 parts: 30 parts: 10 parts, respectively, and further dispersed into the state of fine particles of less than 30 μm.

(Performance of coating film)
Adhesion: measured by the cross-cut cellophane tape adhesion test in compliance with JIS K 5400.
Wear Resistance: measured by the abrasion loss test (mg/100) in compliance with JIS K 6902.
Shock Resistance: measured by means of the Du Pont testing machine per sample of 300 g · 30 cm in compliance with JIS K 5400.
Accelerated Weathering: measured by means of sunshine carbon weathering machine for the exposure time 500 hours in compliance with JIS K 5400.

TABLE 1

Stability of modified chlorinated resin

| Performance<br><br>Sample | Directly after manufacture | Overnight stand—filter—one day stand (20°C) | Overnight stand—filter—one day stand (5°C) |
|---|---|---|---|
| Example 1 | transparent | same as left | same as left |
| Example 2 | transparent | same as left | same as left |
| Example 3 | transparent | same as left | same as left |

TABLE 2

Performance of coating film painted on polypropylene

| Performance<br><br>Sample | Adhesion | Wear resistance | Shock resistance | Accelerated weathering |
|---|---|---|---|---|
| Example 1 | 98/100 | 20 | nothing wrong | not changed |
| Example 2 | 100/100 | 18 | same as above | same as above |
| Example 3 | 95/100 | 12 | same as above | same as above |

# 0 038 004

## TABLE 3

### Performance of coating film painted on sheet iron

| Performance<br><br>Sample | Adhesion | Wear<br>resistance | Shock<br>resistance | Accelerated<br>weathering |
|---|---|---|---|---|
| Example 1 | 100/100 | 25 | nothing wrong | not changed |
| Example 2 | 95/100 | 27 | same as above | same as above |
| Example 3 | 80/100 | 18 | same as above | same as above |

The invention has been described circumstantially hereinbefore in citing its various examples and comparisons, although only coating materials were given as such examples. However, it will be understood that the invention may be made also referring to printing inks or adhesives. Therefore, the invention is not limited to the specific embodiments thereof except as defined in the appended claim.

**Claim**

A process for producing a modified chlorinated resin characterized by allowing a chlorinated resin having a chlorine content of less than 50 percent by weight selected from the group consisting of chlorinated polyethylene, chlorinated polypropylene and chlorinated rubber to react with a vinyl compound, a vinylidene compound, an allyl compound or a polybutadiene in the presence of catalyst while heating at a temperature from 60° to 250°C under a stream of inert gas.

**Patentanspruch**

Verfahren zur Herstellung einer Komposition modifizierter chlorierter Harze, dadurch gekennzeichnet, dass man chlorierte Harze mit einem Chlorgehalt von weniger als 50 Gew.-% aus der Gruppe chloriertes Polyethylen, chloriertes Polypropylen und chlorierter Kautschuk mit einer Vinyl-Verbindung, einer Vinilyden-Verbindung, einer Allyl-Verbindung oder Polybutadien in Gegenwart eines Katalysators nach Erhitzen auf eine Temperatur von 60° bis 250°C unter einem Inertgasstrom regieren lasst.

**Revendication**

Procédé pour produire une composition de résines chlorées modifiées, characérisé en ce qu'on fait réagir une résine chlorée contenant moins de 50% en poids de chlore du groupe polyéthylène chloré, polypropylène chloré et caoutchouc chloré, avec un composé de vinyl, de vinylidène, d'allyl ou composé de butadiène, en présence d'un catalyseur pendant qu'on échauffe à une température de 60° à 250°C sous un courant d'un gaz inert.